# EUROPEAN PATENT APPLICATION

(11) **EP 4 841 504 A1**
(43) Date of publication of application: **18.11.2026**
(21) Application number: 25305701.2
(22) Date of filing: 16.05.2025
(51) Int. Cl.: G06K 19/07, G06K 19/077

(54) **LED DEVICE FOR A CONTACTLESS SMARTCARD**

(71) Applicant: THALES DIS FRANCE SAS, 92190 Meudon (FR)
(72) Inventor: GASPARI, Sebastien, 13005 Marseille (FR); SEBAN, Frédérick, 13390 Auriol (FR)
(74) Representative: Castelo, Jérôme

(57) **Abstract**

The invention relates to a light emitting diode (LED) module (110) of a smartcard comprising an antenna (210) including a plurality of spires connected to at least one LED (220). The LED module (110) further comprises at least one capacitor (300) connected in parallel with the at least one LED (220). The invention also relates to a wireless smart card comprising a smartcard module connected to a second antenna, and further comprising a LED module (110) according to the invention.

## Description

### Technical Field

The invention relates to a LED device for a contactless smartcard.

### Background Art

Contactless smartcards are currently used for banking operation. The payment is made by simply put the smart card in front of an antenna of the card reader. Some readers have a marked area indicating where the antenna of the reader is, but some other readers, like smartphones, do not really indicate where the antenna is.

In addition, an antenna of a reader continuously emits till the transaction is performed and stops the emission once the transaction is made. So, even if the transaction is made, a user presenting his smartcard does know if the transaction is performed till the reader informs the user that the transaction is done, sometimes several seconds after the transaction. Waiting the feedback of the reader, the user can still move unnecessarily his card in front of the reader.

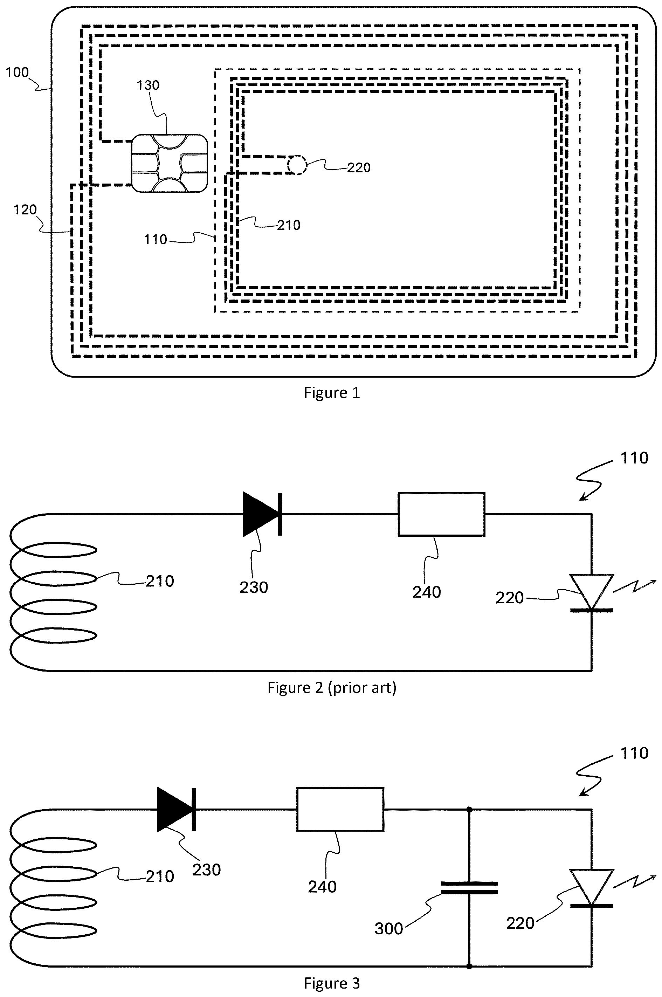

For improving the user experience, a feedback of the transaction can be made directly on the card with a light signal provided by one or more LEDs powered by the transmission field. The figure 1 shows a smartcard 100 including a LED circuit 120 located in the middle of the smartcard 100, inside the antenna 140 used for transaction communications. The LED circuit 120 can be made as shown on figure 2, according to prior art. The LED circuit 120 can comprises a LED 121 serially connected with an antenna 122. Optionally, the LED circuit 120 can further comprises an additional diode 123 and a resistor 124 for limiting the current into the LED 121. Such kind of LED circuit can light the diode when the field of the reader crosses the antenna 122.

Considering the fact that a card reader emits a magnetic field till the transaction is made, the LED lighting can be made from the entry of the smartcard in the field of the reader till the end of the transaction. Considering that a transaction can be made between 250 milliseconds and 600 milliseconds, the user might not notice the lighting of the LED if the time of the transaction is too short and if the user has not his eyes on the smartcard. There is a need to increase the lighting time of the LED.

### Summary of the Invention

The invention consists in adding a capacitor in parallel with the LED in such a way to power the LED for a time longer than a transaction time. More particularly, the invention relates to a light emitting diode (LED) module of a smartcard comprising an antenna including a plurality of spires connected to at least one LED. The LED module further comprises at least one capacitor connected in parallel with the at least one LED. Preferentially, the capacitor can be in parallel with a first branch containing the at least one LED and at least one first resistor serially mounted with the LED.

According to an embodiment, the capacitor can be serially mounted with a second resistor in a second branch, said second branch being in parallel with the first branch.

According to another embodiment, the first branch can comprise a first diode serially mounted with the first resistor and the LED, wherein the capacitor can be serially mounted with a second diode in a second branch, said second branch being in parallel with the first branch, and wherein a terminal of the capacitor can be connected to the first branch through a second resistor.

For increasing significantly the time of lighting, the LED module can comprise a charge pump charging the capacitor, a current limiter limiting the current provided from the capacitor to the at least one LED, and a switch connecting said current limiter to said at least one LED.

For improving the LED module, said LED module can further comprise at least one redressing diode and a redressing capacitor connected between the antenna and the capacitor, said redressing diode and redressing capacitor providing a redressed voltage to the capacitor and to the at least one LED.

The invention also provides a wireless smart card comprising a smartcard module connected to a second antenna and a LED module according to the invention.

### Brief description of the Drawings

The invention will be detailed with reference to the annexed drawings in which:
Figure 1 shows a smartcard having a LED module,
Figure 2 shows a LED module according to prior art,
Figure 3 shows a first embodiment of the invention,
Figure 4 shows a second embodiment of the invention,
Figure 5 shows a third embodiment of the invention,
Figure 6 shows a fourth embodiment of the invention,
Figure 7 shows a fifth embodiment of the invention,
Figure 8 shows a sixth embodiment of the invention, and
Figure 9 shows a seventh embodiment of the invention.

### Detailed Description of the invention

In such a way to simplify the present specification, a same reference is used on different drawings for designing a same element or an equivalent element.

The figure 1 illustrates a smartcard 100 comprising a wireless interface and a light emitting diode (LED) module 110. The smartcard 100 further comprises a communication antenna 120 and a smartcard module 130. The smartcard module 130 can be a dual interface as shown on the figure 1 or optionally a wireless module. The LED module 110 and the communication antenna 120 are laminated inside the smartcard body according to a method well known in the art.

The figure 2 illustrates the electronic constitution of a LED module 110 according to prior art. The LED module 110 comprises an antenna 210, at least one LED 220, a redressing diode 230, and a limiting resistor 240 serially mounted. The redressing diode 230 and the limiting resistor are optional component for limiting the current and voltage inside the LED 220. The antenna 210 provides a voltage on its terminal that is proportional to a magnetic field crossing it. Then when the voltage is sufficiently important the LED 220 is lighted. Considering that the reader magnetic field is an alternative field, the LED can be lighted each time the voltage is higher than the threshold voltage for lighting the LED. Considering that the communication field at a high frequency of 13.56 MHz, The LED can appear to be continuously lighted by the user till the field is emitted by the reader. But, once the transaction between the smartcard and the reader is made, the communication field is cut and the LED switch off. Considering that a transaction can be made between 250 milliseconds and 600 milliseconds, the user might not notice the lighting of the LED if the time of the transaction is too short and if his attention is not fixed on the smartcard.

The invention aims to increase the lighting time of the LED by adding a capacitor used as energy tank for the LED. The figure 3 shows a first embodiment of a LED module 110 according to the invention comprising an antenna 210, at least one LED 220, a redressing diode 230, and a limiting resistor 240 serially mounted as on figure 2 but further comprising a capacitor 300 mounted in parallel with the LED 220. The capacitor 300 can be charged by the communication field once the voltage provided through the redressing diode 230 is higher than the voltage at the terminals of the capacitor 300. When the redressing diode 230 is open because the voltage is lower than the voltage at the terminals of the capacitor 300, the capacitor 300 powers the LED which can be lighted few cycles more after the end of the transaction.

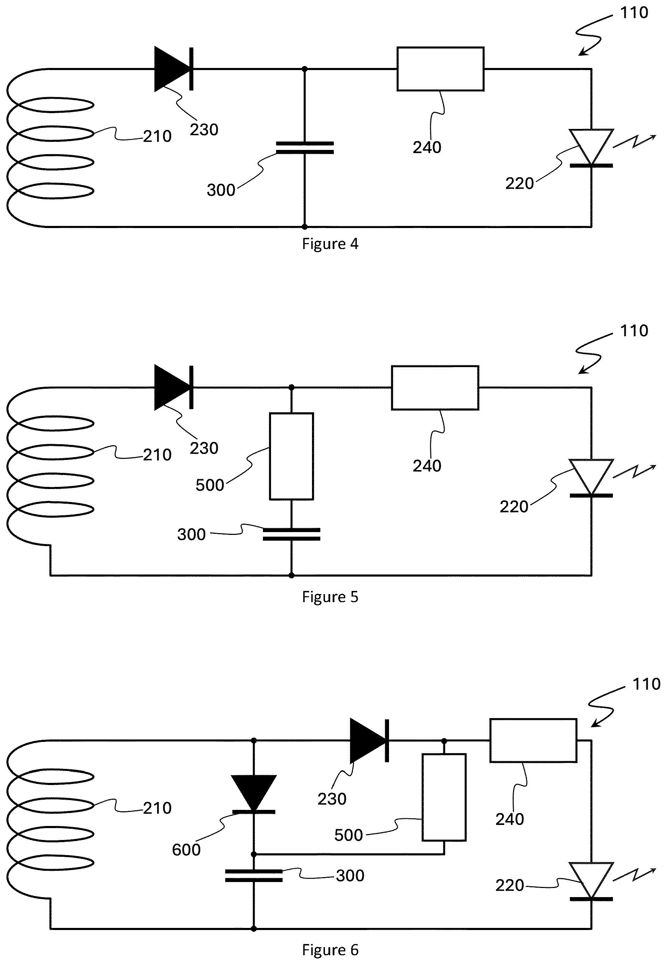

The figure 4 shows a second embodiment of a LED module 110 according to the invention which differs from the figure 3 by the placing of the capacitor 300 in parallel with the limiting resistor 240 and the LED 220. Such a difference can increase the charge into the capacitor 300 because the voltage at the terminals of the capacitor is not limited by the voltage at the terminals of the LED 220 but limited by the voltage at the terminals of the branch containing the LED 220 and the limiting resistor 240. The charge contained into the capacitor 300 being more important than in the capacitor 300 of figure 3, the effect is to increase the time for which the LED can be maintained lighted after the stop of the communication field.

The figure 5 shows a third embodiment which is an improvement of the second embodiment. In this third embodiment, the LED module 110 according to the invention comprises an antenna 210, at least one LED 220, a redressing diode 230, a limiting resistor 240, a capacitor 300 and a charging resistor 500. The LED 220 and the limiting resistor 240 are serially mounted in a first branch. The capacitor 300 and the charging resistor 500 are serially mounted in a second branch. The antenna 210 and the redressing diode 230 are serially mounted in a third branch. The first, second and third branches are connected in parallel. When the voltage provided by the antenna 220 is sufficient for lighting the LED 220, the redressing diode 230 is open and the capacitor 300 is charged through the charging resistor 500. For having a capacitor 300 charged to a voltage value higher than the voltage of the LED 220, it is preferable to have a charging capacitor 500 having a resistance lower than the limiting resistor 240. In addition, the capacitor can be discharged in a resistance which is equal to the sum of the resistances of the limiting resistor 240 and of the charging resistor 500 for lighting the LED 220. SO, this third embodiment increases the discharging time of the capacitor 300 with regards to the second embodiment.

The figure 6 shows a fourth embodiment improving the third embodiment by the addition of a second redressing diode 600 bypassing the redressing diode 230 and the charging resistor 500 for charging directly the capacitor 300. Such fourth embodiment increase the voltage of the capacitor 300 and consequently increase the discharging time of the capacitor 300 with regards to the third embodiment.

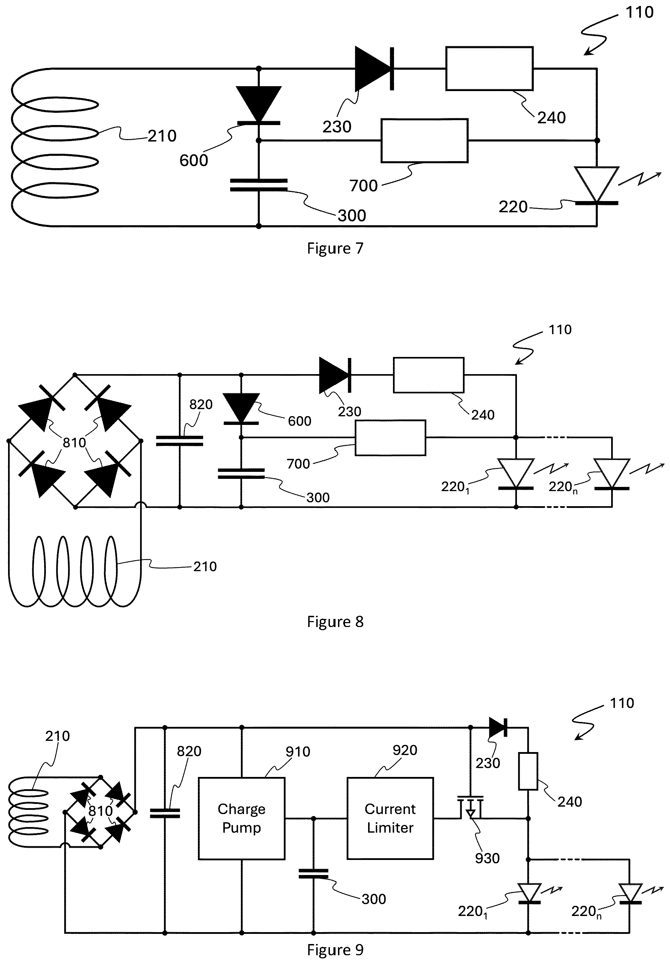

The figure 7 is a fifth embodiment corresponding to a variant of the fourth embodiment wherein the charging resistor 500 is replaced by a discharging resistor 700 connecting directly the capacitor 300 to the LED 220. In this embodiment, the resistance of the discharging resistor 700 should be higher than the resistance of the limiting resistor 240 for increasing the discharging time of the capacitor 300.

Figure 8 shows a sixth embodiment corresponding to an improvement to the fifth embodiment comprising at least one additional redressing diode 810 and a redressing capacitor 820 connected between the antenna 210 on one side and on the other side to the at least one LED 220, the redressing diode 230, the limiting resistor 240, the capacitor 300, the second redressing diode 600 and the discharging resistor 700, which are connected together as on the fifth embodiment. More particularly, the at least one additional diode 810 can consist in a redressing bridge of four diodes. Such an improvement can be seen also as a mix of the second embodiment with the fifth embodiment. In addition, several LEDs 220₁ to 220ₙ are shown on the figure 8.

In the sixth embodiment, the limiting resistor 700 and the charging resistor 240 are sized in such a way that the LEDs 220₁ to 220ₙ are powered by the communication field and the redressing capacitor when a reader is emitting. In this sixth embodiment, the capacitor 300 is charged at the maximum voltage value provided by the communication field without discharging till the end of the transaction and can be discharged with a lower current than the current provided to the LEDs 220₁ to 220ₙ during the communication. The discharging time of the capacitor 300 can be significantly increased with regards to the fifth embodiment.

The person skilled in the art can also add the additional redressing diode 810 and the redressing capacitor 820 to the first to fourth embodiments for improving the discharging time of capacitor 300.

Figure 9 shows a seventh embodiment which comprises the antenna 210, the least one additional redressing diode 810 and the redressing capacitor 820 for providing a redressed and filtered voltage to a branch comprising the redressing diode 230, the limiting resistor 240 and the LEDs 220₁ to 220ₙ which are serially connected. The seventh embodiment further comprises the capacitor 300, a charge pump 910, a current limiter 920 and an auto-switch 930. The charge pump 910 is connected to the terminals of the redressing capacitor 820 and to the capacitor 300 for charging the capacitor 300 up to a voltage value which is a multiple of the voltage value at the terminals of the redressing capacitor 820. The capacitor 300 is also connected in parallel with the LEDs 220₁ to 220ₙ through the current limiter 920 and the auto-switch 930.

As an example, the auto-switch 930 can be a PMOS transistor having its gate connected to the anode of the redressing diode 230, its source connected to the anode of the LEDs 220₁ to 220ₙ and its drain connected to an output of the current limiter 920. With such a connection, the channel of the PMOS is blocked when the voltage on its gate is higher than the voltage on its source, which is the case when the communication field is active and provide a positive voltage at the terminals of the redressing capacitor 820. The channel of the PMOS transistor turns on when the voltage on its gate becomes close to zero volt, i.e. when the communication field is cut.

The current limiter 920 can be made according to prior art for regulating the current discharge of the capacitor 300. The current limiter 920 can limit the current for discharging the capacitor 300 to a current value that is lowest as possible but sufficient for lighting the LEDs 220₁ to 220ₙ.

With this seventh embodiment, the capacitor 300 can be charged to a maximum voltage value that is much more important than the voltage value provided by the antenna 210. In addition, the discharging current can be lower than the current provided to LEDs 220₁ to 220ₙ by the antenna 210. So it is possible to significantly increase the lighting time after the cut of the communication field.

Many variants of the invention are possible without departing of the annexed set of claims. In particular, the person skilled in the art can elaborate some mix of the different embodiments.

## Claims

1. A light emitting diode (LED) module (110) of a smartcard (100) comprising an antenna (210) including a plurality of spires connected to at least one LED (220, 220ᵢ), **characterized in that** it further comprises at least one capacitor (300) connected in parallel with the at least one LED (220, 220ᵢ).

2. The LED module (110) according to claim 1, wherein the capacitor (300) is in parallel with a first branch containing the at least one LED (220, 220ᵢ) and at least one first resistor (240) serially mounted with the LED (220, 220ᵢ).

3. The LED module (110) according to claim 2, wherein the capacitor (300) is serially mounted with a second resistor (500) in a second branch, said second branch being in parallel with the first branch.

4. The LED module (110) according to claim 2, wherein the first branch comprises a first diode (230) serially mounted with the first resistor (240) and the LED (220, 220ᵢ), wherein the capacitor (300) is serially mounted with a second diode (600) in a second branch, said second branch being in parallel with the first branch, and wherein a terminal of the capacitor (300) is connected to the first branch through a second resistor (500, 700).

5. The LED module (110) according to claim 1 or 2, wherein said LED module (110) comprises a charge pump (910) charging the capacitor (300), a current limiter (920) limiting the current provided from the capacitor (300) to the at least one LED (220, 220ᵢ), and a switch (930) connecting said current limiter to said at least one LED (220, 220ᵢ).

6. The LED module (110) according to one of the claims 1 to 5, wherein said LED module (110) further comprises at least one redressing diode (810) and a redressing capacitor (820) connected between the antenna (210) and the capacitor (300), said redressing diode (810) and redressing capacitor (820) providing a redressed voltage to the capacitor (300) and to the at least one LED (220, 220ᵢ).

7. A wireless smart card (100) comprising a smartcard module (130) connected to a second antenna (120), **characterized in that** it further comprises a LED module (110) according to one of the claims 1 to 6.
